Europäisches Patentamt

European Patent Office

Office européen des brevets

(19)

(11) Publication number: 0 295 843
A2

# (12) EUROPEAN PATENT APPLICATION

(21) Application number: 88305364.7

(22) Date of filing: 13.06.88

(51) Int. Cl.⁴: F16M 11/26

(30) Priority: 18.06.87 GB 8714298
10.03.88 GB 8805720

(43) Date of publication of application:
21.12.88 Bulletin 88/51

(84) Designated Contracting States:
BE CH DE FR IT LI LU NL

(71) Applicant: CIL SYSTEMS LTD
Fonthill Road
London N4 3HN(GB)

(72) Inventor: Blass, Clive
69 Hale Lane
London NW7(GB)

(74) Representative: Woodward, John Calvin et al
VENNER SHIPLEY & CO. 368 City Road
London EC1V 2QA(GB)

(54) Telescopic support member with locking mechanism.

(57) An adjustable support member in which an inner tube (3) is slidably and telescopically mounted in an outer tube (1). Relative axial movement between the inner tube (3) and the outer tube (1) is prevented by a locking mechanism actuated by a movable end cap (6) connected by an actuator rod (9) to a cup (8) mounting balls (12) which protrude through holes therein. A cone (4) is fitted into the free end of the inner tube (3). A spring (7) acts against a collar (11) fitted to the actuator rod (9) to draw the cup (8) towards the cone (4) thereby forcing the balls (12) to jam against the inside surface of the outer tube (1) and axially fix the position of the inner tube (3) relative to the outer tube (1).

EP 0 295 843 A2

## TELESCOPIC SUPPORT MEMBER WITH LOCKING MECHANISM

This invention relates to a telescopic support member with a locking mechanism and is intended primarily for use in display stands on which clothes or other articles may be hung, but it can also be used for other purposes.

The height of display stands used in shops or elsewhere often needs to be adjusted to display the clothes or other articles thereon to their best advantage. It is therefore an object of the present invention to provide an adjustable support member whose length, angle or height can be readily adjusted and which is visually appealing.

According to the invention, therefore, there is provided an adjustable support member comprising an inner and outer tube slidable one within the other, a locking mechanism carried by the inner tube section which is resiliently biased to normally lock the two tubes in a fixed position relative to each other but is released on activation of a release member provided at the other end of the inner tube projecting from the outer tube.

Preferably the release member is an end cap slidably mounted in said other end of the inner tube and operably connected to the locking mechanism. Conveniently, the latter comprises a locking member mounted at the free end of the inner tube which is located inside the outer tube, the locking member having one or more tapered surfaces which cooperate with a plurality of jamming members supported in a cup releasably associated therewith, the arrangement being such that the cup is normally drawn towards the locking member to force the jamming members to jam against the inside surface of the outer tube to prevent axial movement of the inner tube relative to the outer tube.

In a preferred embodiment, the locking member comprises a cone. Alternatively it can comprise an end piece mounted at the free end of the inner tube located inside the outer tube, said end piece having tapered channels formed in its outer surface, each of which is shaped to receive and locate a jamming member supported in a cup operably associated therewith, the arrangement being such that the cup is normally drawn towards the end piece to force the jamming members to ride up the tapered channels and jam against the inside surface of the outer tube and prevent both axial and rotational movement of the inner tube relative to the outer tube.

Preferably the cup is connected to the release member by an actuator rod which passes through the locking member. In a preferred embodiment, the inner tube is resiliently biased under the action of a spring which acts between a collar on the actuator rod and the end of the locking member fitted in the inner tube. Conveniently the jamming members are a series of balls mounted in apertures in the cup but other jamming members such as rollers can be used.

In the preferred embodiment, the cup is provided with a plurality of holes around its periphery, each hole receiving a ball which is retained therein by O-rings fitted around the upper and lower limits of said holes. Alternatively, the cup may be provided with a plurality of holes around its periphery, each of which receives a ball to act as the jamming member, the balls being retained in said holes by a steel band fitted around the cup, the holes in the steel band being aligned with those in the cup and being of a slightly reduced diameter.

Preferred embodiments of the invention will now be described, by way of example only, with reference to the accompanying drawings in which

Figure 1 is a partial cross section through one embodiment of an adjustable support member of the invention;

Figure 2 is a partial cross section through a second embodiment; and

Figure 3 is a partial cross section through a third embodiment.

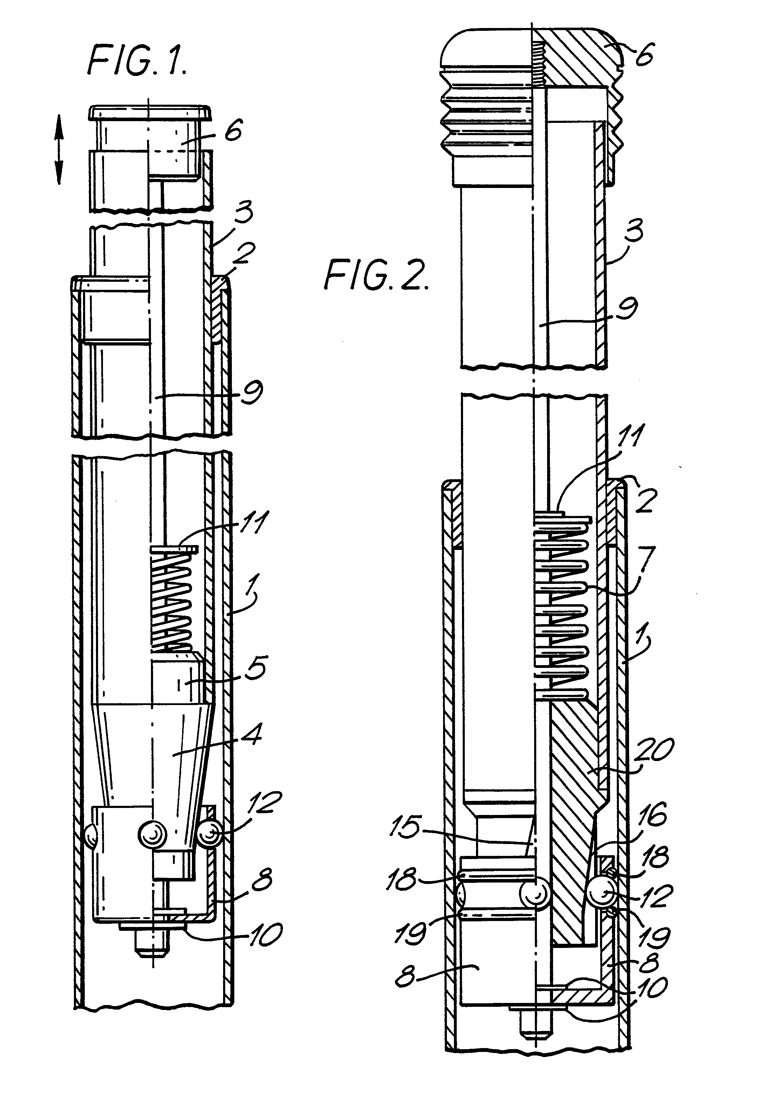

Referring to the drawings, there is shown in Figure 1 an adjustable support member comprising an outer tube 1 having a bush 2 fitted into its free end to act as a guide to slidably receive an inner tube 3 therein. The bush 2 is a press fit into the end of the outer tube 1.

A cone 4 is push fitted by means of a collar 5 of reduced diameter into the end of the inner tube 3 located inside the outer tube 1. The other end of the inner tube 3 is closed by an end cap 6 which is movable axially of the inner tube 3 against the action of a spring 7. The end cap 6 is connected to a cup 8 by means of an actuator rod 9 which passes through the cone 4 and is attached to the cup 8 by means of the circlips 10 illustrated or by an other convenient means. As can be seen from the drawing, the spring 7 acts between the end of the cone 4 located inside the inner tube 3 and a collar 11 fixedly mounted on the actuator rod 9.

The cup 8 is formed with a plurality of holes therein, each of which receives a ball 12. The holes in the cup are formed so that the balls cannot pass through them completely.

The arrangement illustrated in Figure 1 operates in the following manner. In its normal position, the spring 7 acts against the collar 11 provided on the actuator rod 9 to draw the cup 8 with the balls 12 therein towards the cone 4. This has the effect of forcing the balls radially outwardly into jamming engagement with the outer tube 1. As a result, any telescopic movement between the inner and outer tubes is prevented. In order to change the relative axial position of the inner tube to the outer tube, of the end cap 6 is depressed which causes the cup 8 to move away from the cone 4 thereby allowing the balls 12 to come out of jamming contact with the outer tube 1. The position of the inner tube 3 relative to the outer tube 1 can therefore be altered while the end cap 6 is depressed. However, on release of any pressure on the end cap 6, it is returned to its normal position (as illustrated) under the action of the spring 7 whereby the cup 8 is again drawn towards the cone 4 and the balls 12 are forced outwardly into jamming engagement again with the outer tube 1 thereby fixing the inner tube in a new axial position relative to the outer tube. It will be appreciated with the described arrangement that it is very simple to adjust the position of the inner tube relative to the outer tube by simply depressing the end cap 6.

One of the problems with the arrangement shown in Figure 1 so that it is possible for the inner tube to be rotated with respect to the outer tube. This is particularly disadvantageous when a laterally extending arm (not shown) is attached to the inner tube intermediate the end cap 6 and the bush 2 because considerable leverage can be applied thereto to rotate it relative to the outer tube 1. This happens because the balls 12 run around the cone 4. The embodiment shown in Figure 2 overcomes this problem by mounting the balls 12 in slots 15 whose bottom is inclined at 16 to provide a surface which will force the balls 12 radially outwardly into jamming engagement with the outer tube 1 when the cup 8 is drawn towards locking mechanism end piece 20 which is push-fitted into the free end of the inner tube 3 located within the outer tube 1.

As with the arrangement shown in Figure 1, the inner tube is closed at one end by an end cap 6 connected by means of an actuator rod 9 to the end cup 8. The connection of the rod 9 to the end cup 8 is made by means of circlips 10. Spring 7 acts between the end of the locking mechanism end piece 20 located inside the inner tube 3 and a collar 11 located on the actuator rod 9. As before, the spring 7 urges the actuator rod 9 upwardly as shown in the drawings which has the effect of drawing the cup 8 towards the end piece 20 with the result that the jamming balls 12 are forced radially outwardly into connection with the inner surface of the outer tube 1.

The balls 12 in the embodiment of Figure 2 are retained in the cup 8 by means of circlips 18, 19, snap fitted thereto 8 above and below the holes which receive them. This arrangement is particularly advantageous as it ensures that during assembly of the mechanism the balls 12 cannot drop out of the cup 8 prior to insertion of the inner tube 3 in the outer tube 1.

It will be appreciated, that because the balls 12 are located in slots formed in the locking mechanism end piece 20, they cannot roll around it so rotation of the inner tube 3 relative to the outer tube is thus substantially prevented.

Instead of retaining the balls 12 in the cup 8 by means of the circlips 18, 19, it is also possible to use a steel band with holes therein corresponding to the holes in the cup which receive the balls 12. The holes in the steel band, however, would be of a slightly smaller diameter than the holes in the cup 8 to provide a ridge against which the balls 12 can seat. The band would be a snap fit on the cup 8.

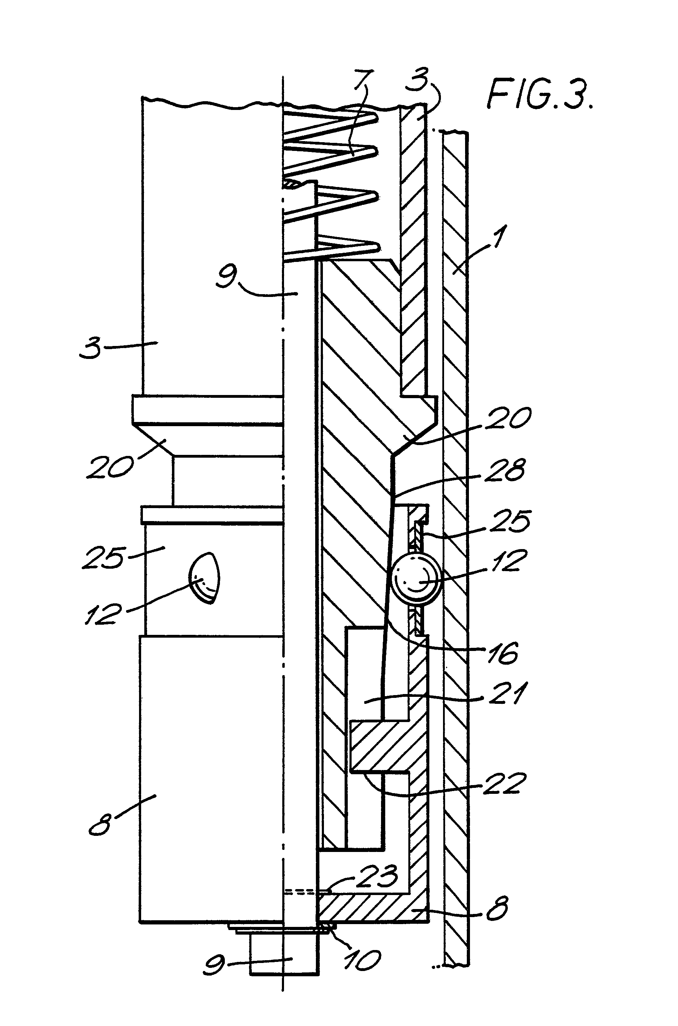

One of the problems found with the arrangements of Figures 1 and 2 is that the balls have to perform a double function namely providing a lock against both rotational and axial movement of the inner and outer tubes. After a time, the balls can chafe the edges of their mounting channels so their locking function can become less effective. Rather than overcoming this problem by making the cone out of a very costly but stronger more wear resistant material, in the mechanism of Figure 3, the balls only have to prevent relative axial movement between the inner and outer tubes, other means being provided on the cone to counteract rotational movement.

Referring now to Figure 3 in which only the lower part of the telescopic member including the locking mechanism is shown, it will be seen that the telescopic member comprises an inner tube 3 through which an actuator rod 9 extends. The top end of the rod is connected to a cap (not shown) fitted on the end of the inner tube 3 and the bottom end is attached to a cup 8 by means of circlip 10 and washer and spirol pin 21. Spring 7 acts between a collar (not shown) attached to the actuator rod 9 and the end of a locking mechanism end piece 20 which has a frusto-conical surface 28 and is press fitted into the end of the inner tube 3. The spring 7 urges the rod 9 upwardly as shown in the drawings which has the effect of drawing the cup 8 towards the end piece 20 thereby forcing balls 12 radially outwardly into contact with the inner surface of the outer tube 1.

The cup 8 is formed with holes through which balls 12 protrude and the balls are retained in the cup 8 by means of a spring or band 25. The band 25 is fitted and located in a recess formed in the outside surface of the cup 8.

Pins 22 project radially inwardly of the cup 8 and are received in respective slots 21 formed in the end piece 20 thereby fixing the cup 8 against rotation relative to the end piece 20. It will be appreciated with this arrangement that the cup 8 cannot rotate relative to the end piece 20 due to the pins 22 being located in slots 21. Furthermore, as the balls 12 cannot themselves rotate circumferentially, the outer tube 1 cannot roll around the balls 12 so it is prevented from rotation relative to the inner tube 3.

The mechanism shown in the drawing is illustrated in its locked condition. To release it and allow the inner tube to be raised or lowered relative to the outer tube, the end cap (not shown) to which the actuator rod 9 is depressed thereby causing the end piece 20 to move downwardly relative to the cup 8. This frees the balls 12 from their jamming contact with the outer tube 1 so the inner tube 3 can move axially relative to it. On release of pressure on the actuator rod 9, the spring 7 raises the rod again thereby drawing the cup 8 upwardly towards the end piece 20. This causes the balls to ride up their ramps 16 and move radially outwardly into jamming contact again with the outer tube.

## Claims

1. An adjustable support member comprising an inner and outer tube slidable one within the other, a locking mechanism carried by the inner tube section characterised in that the locking mechanism (4,8,10,12) is resiliently biased to normally lock the two tubes (1, 3) in a fixed axial position relative to each other but is released on the activation of a release member (6) provided at the other end of the inner tube (2) projecting from the outer tube (1).

2. An adjustable support member as claimed in claim 1 characterised in that the release member is an end cap (6) slidably mounted in said other end of the inner tube (3) and operably connected to the locking mechanism (4, 8, 10, 12).

3. An adjustable support member as claimed in claim 1 or claim 2 characterised in that the locking mechanism comprises a locking member (4) mounted at the free end of the inner tube located inside the outer tube, said locking member (4) having one or more tapered surfaces cooperating with a plurality of jamming members (12) supported in a cup (8) operably associated therewith, the arrangement being such that the cup (8) is normally drawn towards the locking member (4) to force the jamming members (12) to jam against the inside surface of the outer tube (1) and prevent axial movement of the inner tube (3) relative to the outer tube (1).

4. An adjustable support member as claimed in claim 1 or claim 2 characterised in that the locking member (4) comprises a cone.

5. An adjustable support member as claimed in claim 1 or claim 2 characterised in that the locking member (4) comprises an end piece (20) mounted at the free end of the inner tube (3) located inside the outer tube (1), said end piece (20) having tapered channels (16) formed in its outer surface, each of which channels is shaped to receive and locate a jamming member (12) supported in a cup (8) operably associated therewith, the arrangement being such that the cup (8) is normally drawn towards the end piece to force the jamming members (12) to ride up the tapered channels (16) and jam against the inside surface of the outer tube (1) and prevent both axial and rotational movement of the inner tube (1) relative to the outer tube (3).

6. An adjustable support member as claimed in claim 4 or claim 5 characterised in that the cup (8) is connected to the release member (6) by an actuator rod (9) which passes through the locking member (20).

7. An adjustable support member as claimed in any one of the preceding claims characterised in that the inner tube (3) is resiliently biased by a spring (7) which acts between a collar (11) on the actuator rod and the end of the locking member (20) fitted in the inner tube.

8. An adjustable support member as claimed in any one of the preceding claims characterised in that the jamming members are series of balls (12) mounted in apertures in the cup.

9. An adjustable support member as claimed in any one of the preceding claims, characterised in that the cup (8) has a plurality of holes in it, each of which receives a ball (12) which is retained in the cup (8) by O-rings (18,19) fitted around the upper and lower limits of the holes.

10. An adjustable support member as claimed in any one of the preceding claims characterised in that the cup (8) has a series of holes formed around its perimeter, each of which receives a ball (12) which is retained in the cup by means of a steel band (25) formed with corresponding holes in it of slightly less diameter than the holes · in the cup, said steel band being snap-fitted to the cup.

11. An adjustable support member as claimed in claim 1 or claim 2 characterised in that the locking mechanism comprises a locking member (20) mounted at the free end of the inner tube (3), said locking member having a frusto-conical surface cooperating with a plurality of jamming members (12), supported in a cup (8) operably associated therewith, the end of the locking member (20) having at least one groove (21) formed therein, the or each of which receives and locates a pin (22) projecting inwardly from the cup (8).

# FIG.1.

# FIG.2.

FIG.3.